# EUROPÄISCHE PATENTSCHRIFT

(11) **EP 1 440 111 B1**
(45) Veröffentlichungstag und Bekanntmachung des Hinweises auf die Patenterteilung: **12.03.2008**
(21) Anmeldenummer: 02782951.4
(22) Anmeldetag: 18.10.2002
(51) Int. Cl.: C08G 73/06, C08G 59/40

(54) **HÄRTBARE CYANAT-ZUSAMMENSETZUNGEN**
HARDENABLE CYANATE COMPOSITIONS
COMPOSITIONS DE CYANATE DURCISSABLES

(30) Priorität: 19.10.2001 EP 01124967; 22.10.2001 US 330424 P
(43) Veröffentlichungstag der Anmeldung: 28.07.2004
(73) Patentinhaber: Lonza AG, 4052 Basel (CH)
(72) Erfinder: DAUM, Ulrich, CH-4114 Hofstetten (CH); FALCHETTO, Alessandro, I-28845 Domodossola (IT); DAS, Sajal, Bedminster, NJ 07921-1638 (US)
(86) Internationale Anmeldenummer: PCT/EP2002/011662
(87) Internationale Veröffentlichungsnummer: WO 2003/035718

(56) Entgegenhaltungen:
- WO-A-93/17059
- US-A- 4 680 378
- US-A- 5 003 039
- US-A- 5 043 411
- US-A- 5 494 981
- PATENT ABSTRACTS OF JAPAN vol. 012, no. 132 (C-490), 22. April 1988 (1988-04-22) & JP 62 252417 A (TORAY IND INC), 4. November 1987 (1987-11-04)

## Beschreibung

Die Erfindung betrifft härtbare Mischungen aus aromatischen Cyanaten oder Cyanat-Epoxid-Gemischen, aromatischen Aminen und gegebenenfalls Katalysatoren für die Herstellung von Duroplasten auf Polytriazinbasis. Sie betrifft weiterhin die durch Aushärtung dieser Mischungen erhältlichen duroplastischen Massen und deren Verwendung zur Herstellung von Formteilen.

Die aus bi- oder polyfunktionellen aromatischen Cyanaten erhältlichen Polytriazine sowie die aus den genannten Cyanaten und Epoxidharzen erhältlichen Duroplaste sind wegen ihrer überragenden Wärmebeständigkeit und guten dielektrischen Eigenschaften wertvolle Materialien. Unter polyfunktionellen Cyanaten, Epoxiden oder Aminen sind hier und im folgenden jeweils Verbindungen zu verstehen, die drei oder mehr Cyanat-, Epoxy- bzw. Aminogruppen in einem Molekül enthalten.

Die Härtung der genannten Ausgangsmaterialien ist zwar auch auf rein thermischem Weg möglich, erfolgt aber üblicherweise durch Zusatz von katalytisch wirksamen Übergangsmetallverbindungen wie beispielsweise Cobalt- oder Kupferacetylacetonat oder Zinkoctanoat ("Zinkoctoat"). Diese sind aber wegen ihrer Toxizität und/oder Umweltgefährdung - insbesondere bei der Entsorgung der mit ihnen hergestellten Materialien - sowie der möglichen Beeinflussung der elektrischen und magnetischen Eigenschaften an sich nicht erwünscht.

Aufgabe der vorliegenden Erfindung war daher, alternative Zusätze zur Härtung von aromatischen Cyanaten und Cyanat-Epoxid-Mischungen bereitzustellen, die die genannten Nachteile nicht aufweisen.

Erfindungsgemäss wird diese Aufgabe durch die härtbaren Mischungen nach Patentanspruch 1 gelöst. Es wurde überraschend gefunden, dass durch Einsatz von aromatischen Aminen als Härter von bi- oder polyfunktionellen Cyanaten oder deren Mischungen mit Epoxiden nicht nur auf schwermetallhaltige Katalysatoren verzichtet werden kann, sondern auch nach der Aushärtung Produkte mit überragenden Eigenschaften erhalten werden. So wird insbesondere die Glastemperatur (*T*_{g}) markant gesteigert und die ausgehärteten Produkte weisen eine verbesserte Schlagzähigkeit auf. Ausserdem wird die Durchhärtung verbessert und der Härtungsverlauf, insbesondere die Latenz bei der Härtung, verbessert.

Die erfindungsgemässen härtbaren Mischungen enthalten mindestens folgende Bestandteile:
(a) 10 bis 100 Gew.%, bezogen auf die Summe der Komponenten (a) und (b), wenigstens eines bi- oder polyfunktionellen aromatischen Cyanats oder eines Prepolymeren aus wenigstens einem bi- oder polyfunktionellen aromatischen Cyanat oder eines Gemisches aus den vorstehend genannten Cyanaten und/oder Prepolymeren,
(b) 0 bis 90 Gew.%, bezogen auf die Summe der Komponenten (a) und (b), wenigstens eines mono-, bi- oder polyfunktionellen Epoxidharzes,
(c) 0,5 bis 30 Gew.%, bezogen auf die Summe der Komponenten (a) und (b), wenigstens eines mono-, bi- oder polyfunktionellen aromatischen Amins und
(d) 0 bis 5 Gew.%, bezogen auf die Summe der Komponenten (a) und (b), wenigstens eines Katalysators aus der Gruppe bestehend aus Übergangsmetallverbindungen und Bortrihalogeniden.

Unter Übergangsmetallverbindungen sind sowohl Salze als auch Koordinationsverbindungen zu verstehen, wobei die Übergangsmetalle insbesondere solche der ersten und zweiten Übergangsreihe sein können. Hierzu zählen beispielsweise Koordinationsverbindungen wie Cobalt- oder Kupferacetylacetonat, oder Salze wie Zinkoctanoat oder Zinkstearat.
Bortrihalogenide sind insbesondere Bortrifluorid und Bortrichlorid.

Als bi- oder polyfunktionelle aromatische Cyanate werden vorzugsweise solche aus der Gruppe bestehend aus den Verbindungen der allgemeinen Formeln 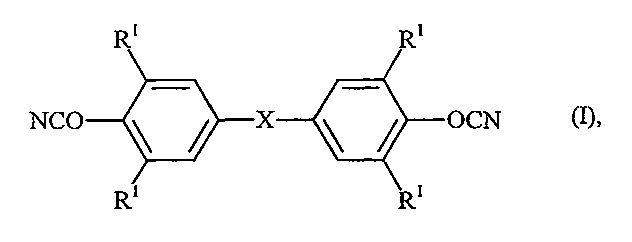 worin R¹ Wasserstoff, Methyl oder Brom bedeutet und X ein zweiwertiger organischer Rest, ausgewählt aus der Gruppe bestehend aus -CH₂-, -CH(CH₃)-, -C(CH₃)₂-, -C(CF₃)₂-, -O-, -S-, -SO₂- -C(=O)-, -OC(=O)-, -OC(=O)O- und 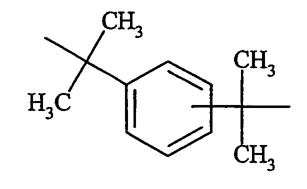 ist; 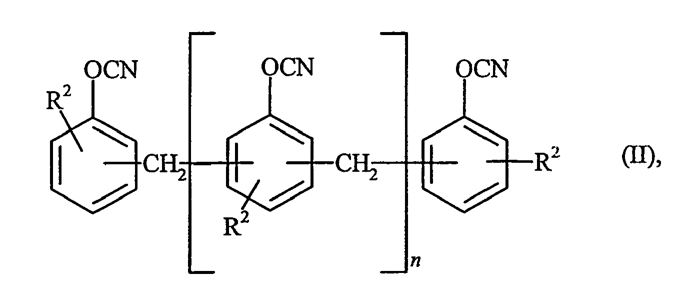 worin *n* eine Zahl von 0 bis 10 und R² Wasserstoff oder Methyl ist;
und 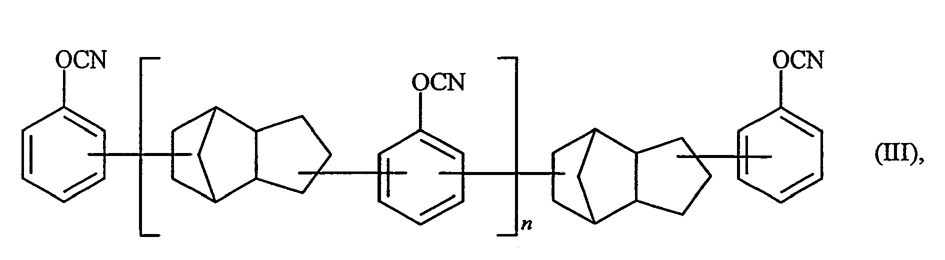 worin *n* die oben genannte Bedeutung hat, eingesetzt. Ebenso können auch Mischungen dieser Verbindungen, Prepolymere dieser Verbindungen, Prepolymere aus Mischungen dieser Verbindungen sowie Mischungen aus Prepolymeren dieser Verbindungen eingesetzt werden. Unter Prepolymeren sind die durch teilweise Trimerisierung erhältlichen Oligomeren zu verstehen. Diese enthalten sowohl durch Trimerisierung entstandene Triazingruppen als auch unumgesetzte Cyanatgruppen. Die Cyanate sind bekannte Verbindungen und zum grossen Teil kommerziell erhältlich, ebenso sind die Prepolymere bekannt und teilweise kommerziell erhältlich oder aus den Cyanaten leicht herstellbar.

Als Epoxidharze werden vorzugsweise solche aus der Gruppe bestehend aus den Verbindungen der allgemeinen Formeln 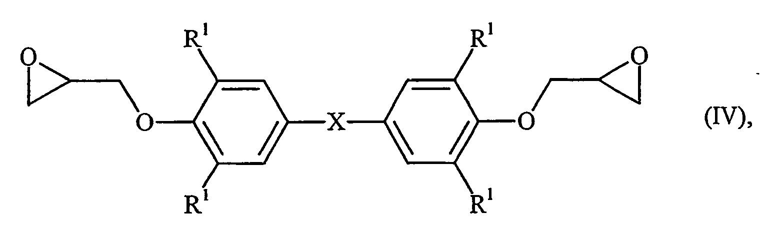 worin R¹ und X die oben genannten Bedeutungen haben, und den entsprechenden Oligomeren; 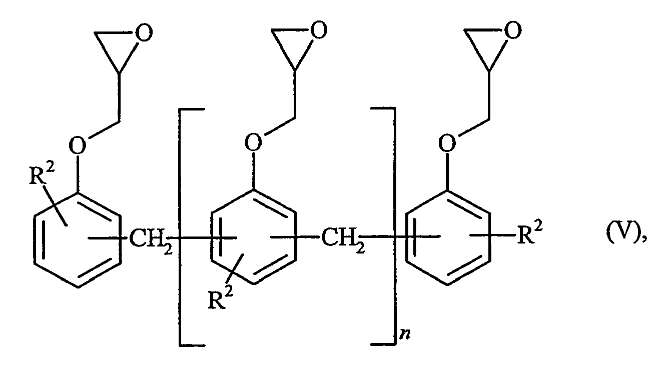 worin *n* und R² die oben genannten Bedeutungen haben;
und 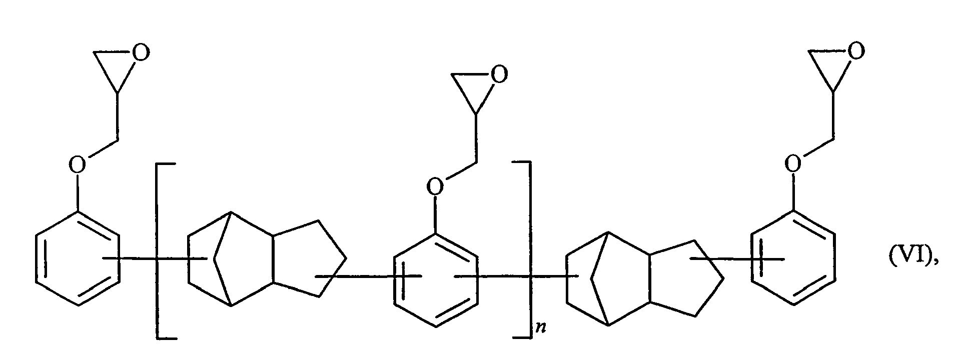 worin *n* die oben genannte Bedeutung hat, eingesetzt. Auch diese Verbindungen sind bekannt und von verschiedenen Herstellern kommerziell erhältlich.

Als aromatische Amine werden vorzugsweise solche aus der Gruppe bestehend aus den Verbindungen der allgemeinen Formeln 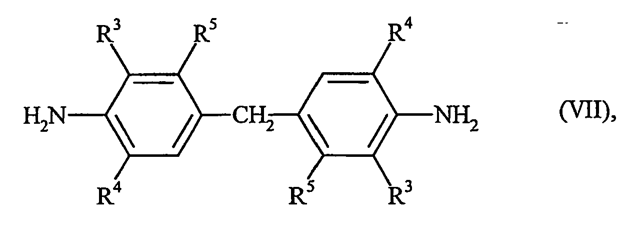 worin R³, R⁴ und R⁵ unabhängig voneinander Wasserstoff, C₁₋₄-Alkyl oder Halogen bedeuten, und 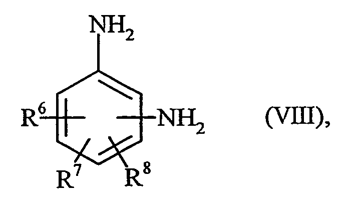 worin R⁶, R⁷ und R⁸ unabhängig voneinander Wasserstoff oder C₁₋₄-Alkyl bedeuten, eingesetzt. Auch diese Verbindungen sind bekannt und zum grossen Teil kommerziell erhältlich. Verbindungen der Formel VII werden beispielsweise als Kettenverlängerer in Polyurethanen und solche der Formel VIII als Aminkomponente in Polyharnstoffen oder als Ausgangsmaterialien für die Herstellung von Isocyanaten eingesetzt.

Ebenfalls Gegenstand der Erfindung sind die durch durch thermische Aushärtung der vorstehend beschriebenen Mischungen, gegebenfalls unter Zusatz von Füll- und/oder Hilfsstoffen erhältlichen duroplastischen Massen auf Polytriazinbasis. Unter Füll- und Hilfsstoffen sind insbesondere Verstärkungsmaterialien in Gewebe-, Faser- oder Partikelform, Farbstoffe oder sonstige Zusätze zur Erzielung besonderer mechanischer, optischer, elektrischer oder magnetischer Eigenschaften oder zur Verbesserung der Verarbeitungseigenschaften zu verstehen. Diese Füll- und Hilfsstoffe sind dem Fachmann bekannt.

Weiterhin ist die Verwendung der so erhältlichen duroplastischen Massen zur Herstellung von Formteilen für elektronische Geräte, Luft- und Raumfahrzeuge, Strassen- und Schienen- und Wasserfahrzeuge und industrielle Zwecke Gegenstand der Erfindung.

Die folgenden Ausführungsbeispiele verdeutlichen die Erfindung, ohne dass darin eine Einschränkung zu sehen ist.

### Beispiele 1-8

Es wurden Mischungen aus Cyanat (PRIMASET^{®} PT 15 der Lonza AG; Formel II, R² = H, Viskosität 20-30 Pa·s bei 80 °C), gegebenenfalls Epoxid (Dow DER 330; Formel IV, R¹ = H, X = -C(CH₃)₂-), und Amin (LONZACURE^{®} DETDA der Lonza AG, Formel VIII, R⁶ = R⁷ = Et, R⁸ = Me, Isomerengemisch) hergestellt.und thermisch ausgehärtet. Von den ausgehärteten Proben wurde durch thermomechanische Analyse die Glastemperatur (*T_{g}*) bestimmt. Die Mischungsverhältnisse, Härtungsbedingungen und Glastemperaturen sind in der folgenden Tabelle 1 zusammengefasst.

**Tabelle 1**

| **Beispiel Nr.** | **Epoxid [g]** | **Cyanat [g]** | **Amin [g]** | ***T*_{g} [°C]** | **Härtetemp.** | **Härtezeit** |
|---|---|---|---|---|---|---|
| | | | | | **[°C]** | **[min]** |
| 1 | ― | 100 | 1,0 | 361 | 150 | 60 |
| 2 | ― | 100 | 2,5 | 361¹⁾ | 150 | 60 |
| 3 | ― | 100 | 5,0 | 368 | 150 | 60 |
| 4 | ― | 100 | 10,0 | 377 | 150 | 60 |
| 5 | 75 | 25 | 2,5 | 375 | 150 | 60 |
| 6 | 75 | 25 | 5,0 | 367 | 150 | 60 |
| 7 | 75 | 25 | 10,0 | 351 | 150 | 60 |
| 8 | 75 | 25 | 10,0 | 378 | 150/200/250 | 180/180/180 |

| | | | | | | |
|---|---|---|---|---|---|---|
| ¹⁾ nach vollständiger Aushärtung (2. Messzyklus) | | | | | | |

### Beispiele 9-12

Es wurde verfahren wie in den vorstehenden Beispielen beschrieben, jedoch wurde als Amin LONZACURE^{®} M-CDEA (Formel VII, R³ = R⁴ = Et, R⁵ = Cl) eingesetzt. Die Ergebnisse sind in der folgenden Tabelle 2 zusammengefasst.

**Tabelle 2**

| **Beispiel Nr.** | **Epoxid [g]** | **Cyanat [g]** | **Amin [g]** | ***T*_{g} [°C]** | **Härtetemp.** | **Härtezeit** |
|---|---|---|---|---|---|---|
| | | | | | **[°C]** | **[min]** |
| 9 | ― | 100 | 5,0 | 384¹⁾ | 150 | 60 |
| 10 | 75 | 25 | 2,5 | 366 | 150/200/250 | 180/180/180 |
| 11 | 75 | 25 | 5,0 | 362 | 150 | 60 |
| 12 | 75 | 25 | 10,0 | 370 | 150 | 60 |

| | | | | | | |
|---|---|---|---|---|---|---|
| ¹⁾ nach vollständiger Aushärtung (2. Messzyklus) | | | | | | |

### Beispiele 13-16

Es wurde verfahren wie in den Beispielen 9-12 beschrieben, jedoch wurde statt des Cyanats PRIMASET^{®} PT 15 das Cyanat PRIMASET^{®} CT 90 (Formel II, R² = Me, Erweichungstemperatur >60 °C) eingesetzt. Die Ergebnisse sind in der folgenden Tabelle 3 zusammengefasst.

**Tabelle 3**

| **Beispiel Nr.** | **Epoxid [g]** | **Cyanat [g]** | **Amin [g]** | ***T*_{g} [°C]** | **Härtetemp.** | **Härtezeit** |
|---|---|---|---|---|---|---|
| | | | | | **[°C]** | **[min]** |
| 13 | 75 | 25 | 5,0 | 369¹⁾ | 150 | 60 |
| 14 | 75 | 25 | 5,0 | 376 | 150/200/250 | 180/180/180 |
| 15 | 75 | 25 | 10,0 | 372 | 150 | 60 |
| 16 | 75 | 25 | 10,0 | 373 | 150/200/250 | 180/180/180 |

| | | | | | | |
|---|---|---|---|---|---|---|
| ¹⁾ nach vollständiger Aushärtung (2. Messzyklus) | | | | | | |

## Patentansprüche

1. Härtbare Mischung, mindestens enthaltend
(a) 10 bis 100 Gew.%, bezogen auf die Summe der Komponenten (a) und (b), wenigstens eines bi- oder polyfunktionellen aromatischen Cyanats oder eines Prepolymeren aus wenigstens einem bi- oder polyfunktionellen aromatischen Cyanat oder eines Gemisches aus den vorstehend genannten Cyanaten und/oder Prepolymeren,
(b) 0 bis 90 Gew.%, bezogen auf die Summe der Komponenten (a) und (b), wenigstens eines mono-, bi- oder polyfunktionellen Epoxidharzes,
(c) 0,5 bis 30 Gew.%, bezogen auf die Summe der Komponenten (a) und (b), wenigstens eines mono-, bi- oder polyfunktionellen aromatischen Amins und
(d) 0 bis 5 Gew.%, bezogen auf die Summe der Komponenten (a) und (b), wenigstens eines Katalysators aus der Gruppe bestehend aus Übergangsmetallverbindungen und Bortrihalogeniden.

2. Härtbare Mischung nach Anspruch 1, **dadurch gekennzeichnet, dass** das bi- oder polyfunktionelle aromatische Cyanat ausgewählt ist aus der Gruppe bestehend aus den Verbindungen der allgemeinen Formeln 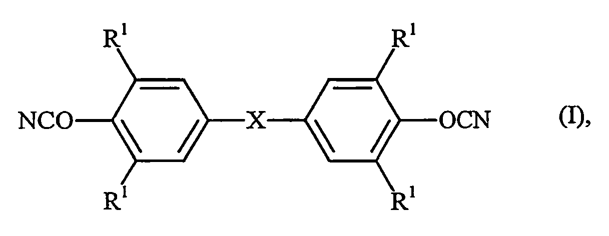 worin R¹ Wasserstoff, Methyl oder Brom bedeutet und X ausgewählt ist aus der Gruppe bestehend aus -CH₂-, -CH(CH₃)-, -C(CH₃)₂-, -C(CF₃)₂-, -O-, -S-, -SO₂-, -C(=O)-, -OC(=O)-, -OC(=O)O- und 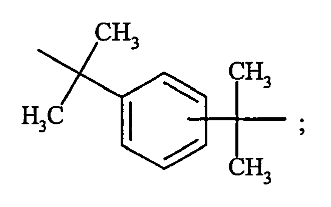 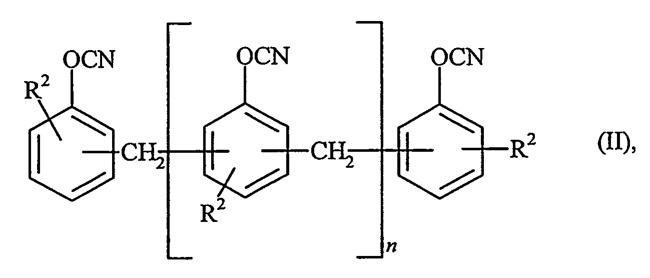 worin *n* eine Zahl von 0 bis 10 und R² Wasserstoff oder Methyl ist,
und 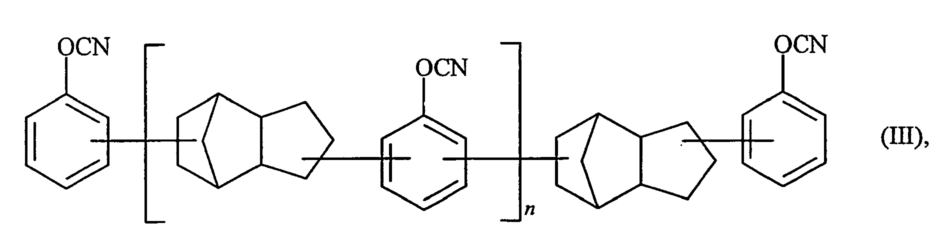 worin *n* die oben genannte Bedeutung hat,
und Prepolymeren aus einer oder mehreren dieser Verbindungen.

3. Härtbare Mischung nach Anspruch 1 oder 2, **dadurch gekennzeichnet, dass** das Epoxidharz ausgewählt ist aus der Gruppe bestehend aus den Verbindungen der allgemeinen Formeln 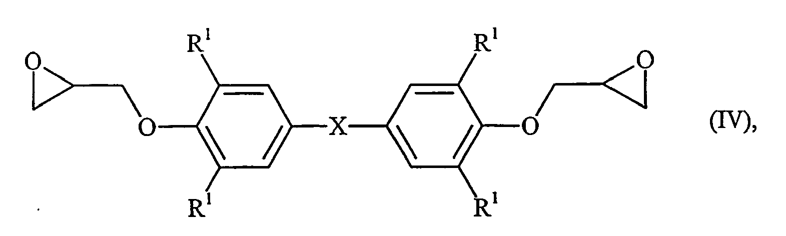 worin R¹ und X die in Anspruch 2 genannten Bedeutungen haben, und den entsprechenden Oligomeren, 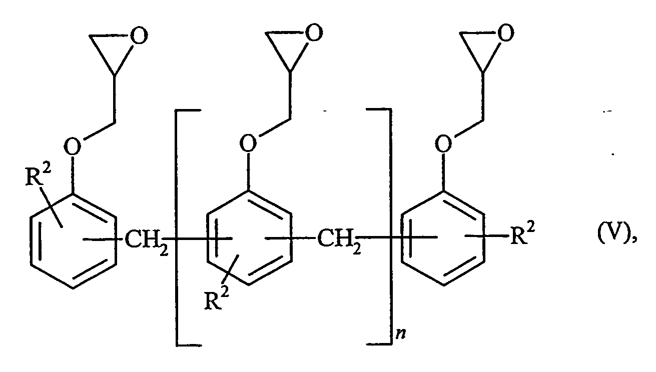 worin *n* und R² die in Anspruch 2 genannten Bedeutungen haben,
und 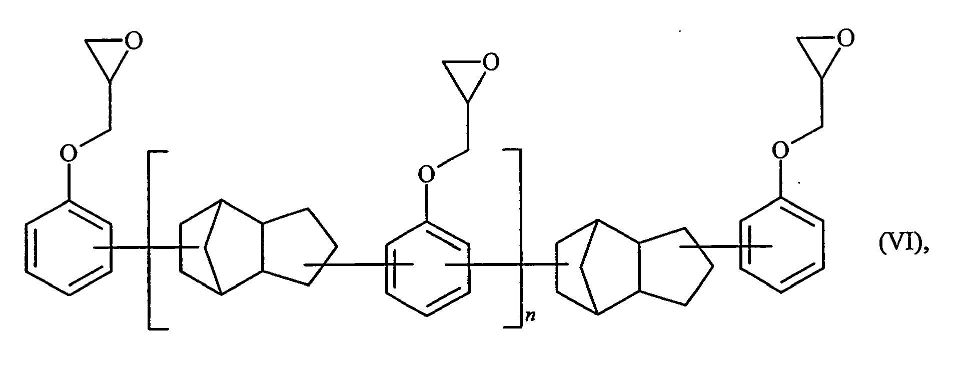 worin *n* die oben genannte Bedeutung hat.

4. Härtbare Mischung nach einem der Ansprüche 1 bis 3, **dadurch gekennzeichnet, dass** das aromatische Amin ausgewählt ist aus der Gruppe bestehend aus den Verbindungen der allgemeinen Formeln 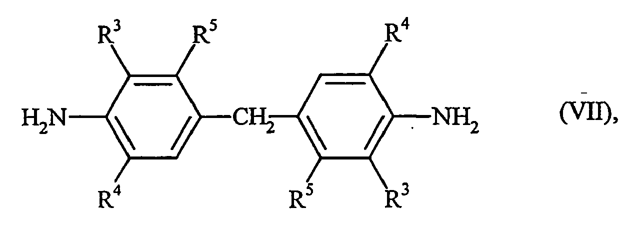 worin R³, R⁴ und R⁵ unabhängig voneinander Wasserstoff, C₁₋₄-Alkyl oder Halogen bedeuten, und 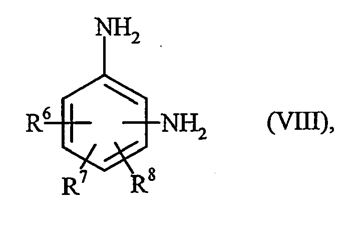 worin R⁶, R⁷ und R⁸ unabhängig voneinander Wasserstoff oder C₁₋₄-Alkyl bedeuten.

5. Duroplastische Massen auf Polytriazinbasis, erhältlich durch thermische Aushärtung der Mischungen gemäss einem der Ansprüche 1 bis 4, gegebenfalls unter Zusatz von Füll- und/oder Hilfsstoffen.

6. Verwendung der duroplastischen Massen gemäss Anspruch 5 zur Herstellung von Formteilen für elektronische Geräte, Luft- und Raumfahrzeuge, Strassen- und Schienen- und Wasserfahrzeuge und industrielle Zwecke.

## Claims

1. A curable mixture, at least comprising
(a) 10 to 100% by weight, in relation to the sum of the components (a) and (b), of at least one bi- or polyfunctional aromatic cyanate or a prepolymer formed from at least one bi- or polyfunctional aromatic cyanate or a mixture formed from the abovementioned cyanates and/or prepolymers,
(b) 0 to 90% by weight, in relation to the sum of the components (a) and (b), of at least one mono-, bi- or polyfunctional epoxy resin,
(c) 0.5 to 30% by weight, in relation to the sum of the components (a) and (b), of at least one mono-, bi- or polyfunctional aromatic amine, and
(d) 0 to 5% by weight, in relation to the sum of the components (a) and (b), of at least one catalyst from the group consisting of transition metal compounds and boron trihalides.

2. The curable mixture of claim 1, **characterized in that** the bi- or polyfunctional aromatic cyanate is chosen from the group consisting of the compounds of the general formulae 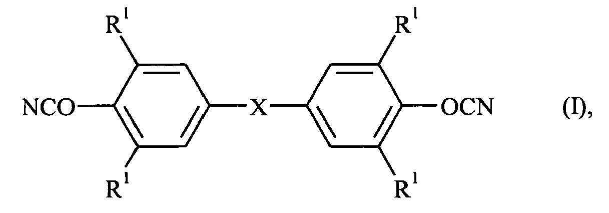 in which R¹ is hydrogen, methyl or bromine and X is chosen from the group consisting of -CH₂-, -CH(CH₃)-, -C(CH₃)₂-, -C(CF₃)₂-, -O-, -S-, -SO₂-, -C(=O)-, -OC(=O)-, -OC(=O)O- and 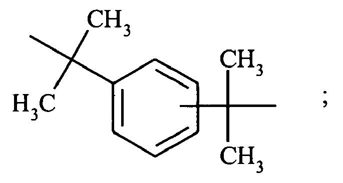 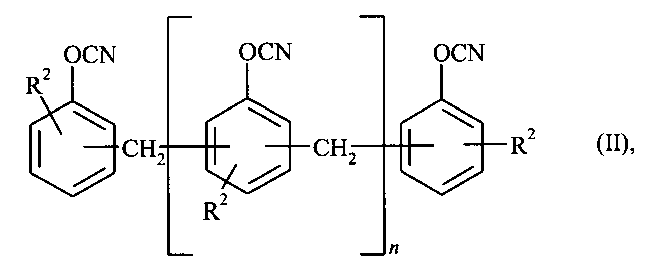 in which *n* is a number from 0 to 10 and R² is hydrogen or methyl;
and 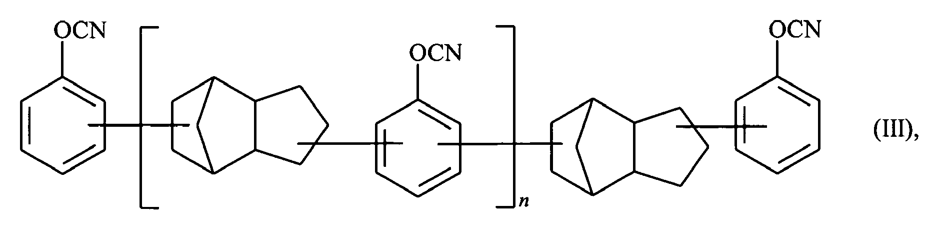 in which *n* has the abovementioned meaning;
and prepolymers formed from one or more of these compounds.

3. The curable mixture of claim 1 or 2, **characterized in that** the epoxy resin is chosen from the group consisting of the compounds of the general formulae 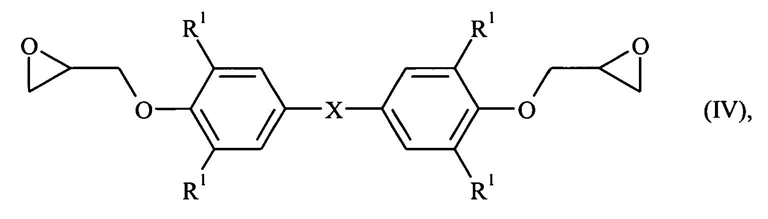 in which R¹ and X have the meanings mentioned in claim 2, and the corresponding oligomers, 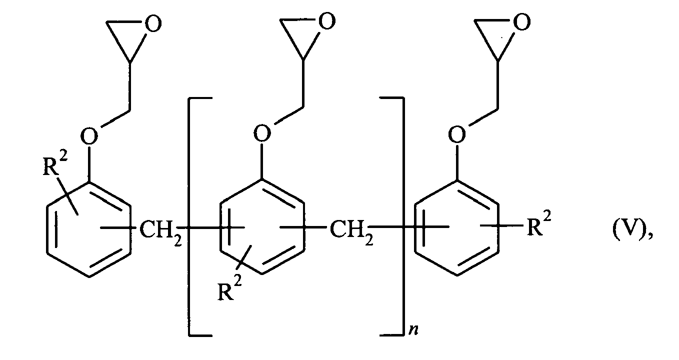 in which *n* and R² have the meanings mentioned in claim 2,
and 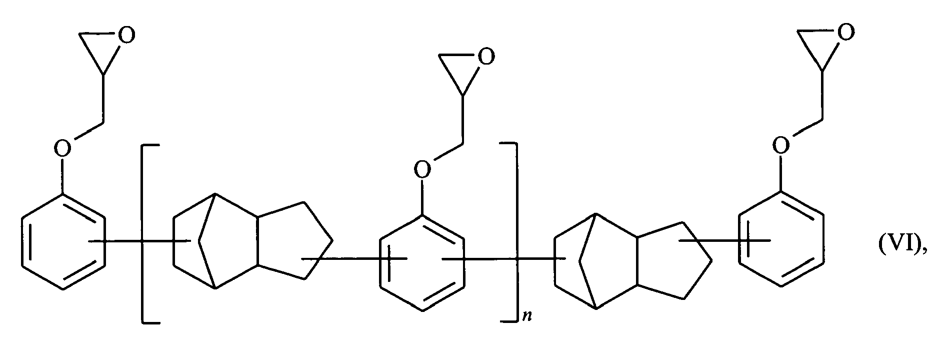 in which *n* has the abovementioned meaning.

4. The curable mixture of any one of claims 1 to 3, **characterized in that** the aromatic amine is chosen from the group consisting of the compounds of the general formulae 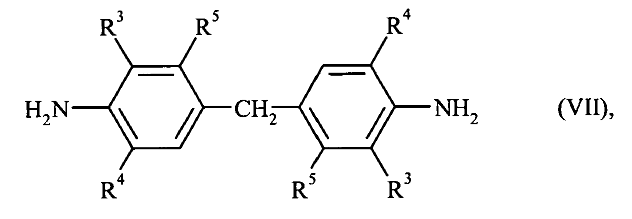 in which R³, R⁴ and R⁵ are, independently of one another, hydrogen, C₁₋₄-alkyl or halogen, and 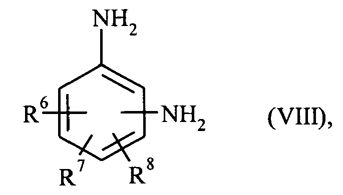 in which R⁶, R⁷ and R⁸ are, independently of one another, hydrogen or C₁₋₄-alkyl.

5. A polytriazine-based thermosetting substance, obtainable by thermal curing of the mixture according to one of claims 1 to 4, optionally with addition of fillers and/or auxiliaries.

6. The use of the thermosetting substance of claim 5 in the preparation of molded items for electronic equipment, aircraft, spacecraft, road vehicles, rail vehicles, watercraft and industrial purposes.

## Revendications

1. Mélange durcissable comprenant au moins :
(a) de 10 à 100 % en poids, par rapport à la somme des composants (a) et (b), d'au moins un cyanate aromatique bi-fonctionnel ou polyfonctionnel ou un prépolymère d'un cyanate aromatique bifonctionnel ou polyfonctionnel,
(b) de 0 à 90 % en poids, par rapport à la somme des composants (a) et (b), d'au moins une résine epoxy monofonctionnelle, bifonctionnelle ou polyfonctionnelle,
(c) de 0,5 à 30 % en poids, par rapport à la somme des composants (a) et (b), d'au moins une amine aromatique monofonctionnelle, bifonctionnelle ou polyfonctionnelle et
(d) de 0 à 5 % en poids, par rapport à la somme des composants (a) et (b), d'au moins un catalyseur parmi le groupe constitué de composés de métaux de transition et de trihalogénures de bore.

2. Mélange durcissable selon la revendication 1, **caractérisé en ce que** le cyanate aromatique bifonctionnel ou polyfonctionnel est choisi parmi le groupe constitué des composés de formules générales 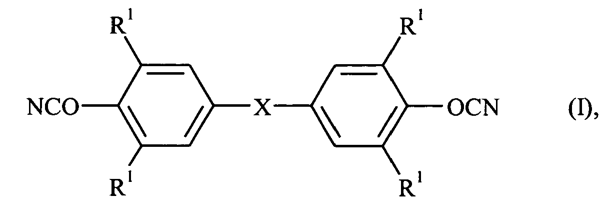 dans laquelle R¹ représente un atome d'hydrogène, un groupe méthyle ou un atome de brome et X est choisi parmi le groupe constitué d'un groupe -CH₂-, d'un groupe -CH(CH₃)-, d'un groupe -C(CH₃)₂-, d'un groupe -C(CF₃)₂-, d'un groupe -O-, d'un groupe -S-, d'un groupe -SO₂-, d'un groupe -C(=O)-, d'un groupe -OC(=O)-, d'un groupe -OC(=O)O- et d'un groupe 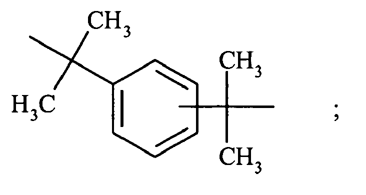 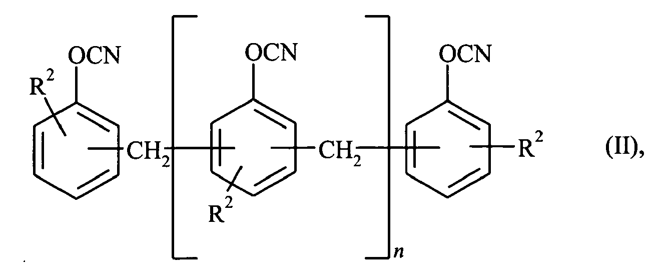 dans laquelle *n* est un entier de 0 à 10 et R² représente un atome d'hydrogène ou un groupe méthyle ;
et 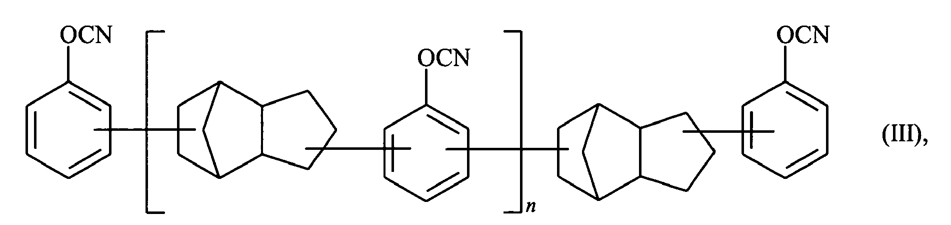 dans laquelle *n* présente la signification mentionnée ci-dessus ;
et de prépolymères d'un ou de plusieurs de ces composés.

3. Mélange durcissable selon la revendication 1 ou 2, **caractérisé en ce que** la résine epoxy est choisie parmi le groupe constitué des composés de formules générales 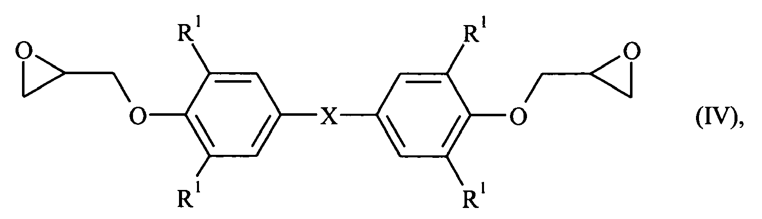 dans laquelle R¹ et X présentent les significations mentionnées dans la revendication 2, et des oligomères correspondants, 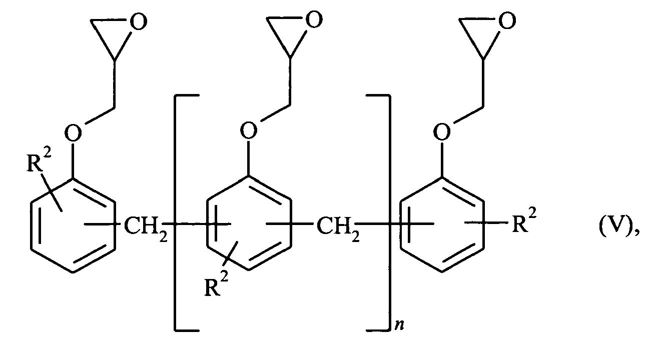 dans laquelle *n* et R² présentent les significations mentionnées dans la revendication 2, et 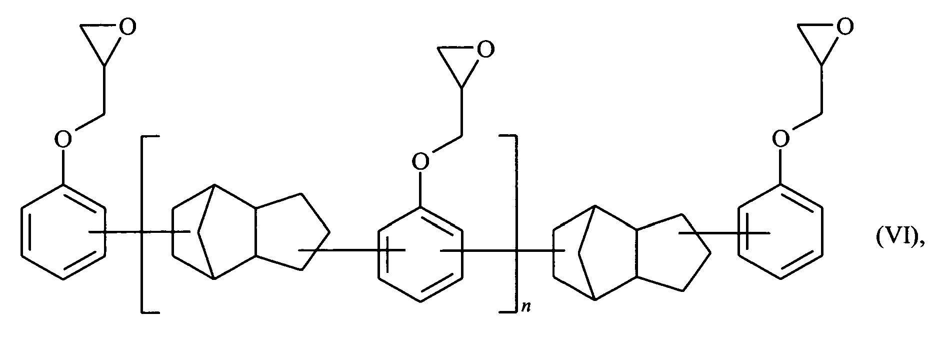 dans laquelle *n* présente la signification mentionnée ci-dessus.

4. Mélange durcissable selon l'une quelconque des revendications 1 à 3, **caractérisé en ce que** l'amine aromatique est choisie parmi le groupe constitué des composés de formules générales 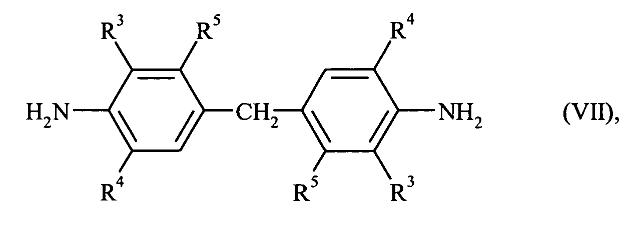 dans laquelle R³, R⁴ et R⁵ représentent, indépendamment les uns des autres, un atome d'hydrogène, un groupe alkyle en C₁₋₄ ou un atome d'halogène, et 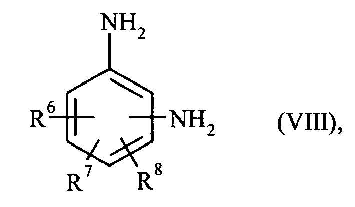 dans laquelle R⁶, R⁷ et R⁸ représentent, indépendamment les uns des autres, un atome d'hydrogène ou un groupe alkyle en C₁₋₄.

5. Compositions duroplastiques à base de polytriazine, pouvant être obtenues par le durcissement thermique des mélanges selon l'une quelconque des revendications 1 à 4, éventuellement en ajoutant des charges et/ou des auxiliaires.

6. Utilisation des compositions duroplastiques selon la revendication 5 pour la production de pièces moulées pour des appareils électroniques, des aéronefs et astronefs, des véhicules routiers et sur rails et des navires, et à des fins industrielles.
